Europäisches Patentamt

European Patent Office

Office européen des brevets

(11) Numéro de publication: **0 193 979**
A2

(12) **DEMANDE DE BREVET EUROPEEN**

(21) Numéro de dépôt: **86200211.0**

(22) Date de dépôt: **14.02.86**

(51) Int. Cl.⁴: **C 02 F 3/30, C 02 F 3/34**

(30) Priorité: **25.02.85 EP 85200249**

(43) Date de publication de la demande: **10.09.86**
**Bulletin 86/37**

(84) Etats contractants désignés: **AT BE CH DE FR GB IT LI LU NL SE**

(71) Demandeur: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Verstraete, Willy, Prof. Dr.ir., Rijksuniversiteit Gent Coupure Links 653, B-9000 Gent (BE)**
Inventeur: **De Ley, Jozef, Prof. Dr., Rijksuniversiteit Gent Ledeganckstraat 35, B-9000 Gent (BE)**

(74) Mandataire: **Bossard, Franz et al, ACEC - Service des Brevets Boîte Postale 4, B-6000 Charleroi (BE)**

(54) Procédé d'élimination de nitrates au moyen d'une conversion micro-biologique en présence d'hydrogène gazeux.

(57) Dans un procédé microbiologique d'élimination de nitrates dans lequel un liquide en solution acqueuse à dénitrifier traverse un premier réacteur (4) contenant une biomasse dénitrifiante utilisant de l'hydrogène avec grande affinité et dans lequel, dans le bas de ce premier réacteur, de l'hydrogène gazeux est injecté (6), l'effluent de ce premier réacteur est introduit dans un deuxième réacteur (10) contenant une biomasse nitrifiante et, dans le bas de ce deuxième rèacteur, est injecté un gaz contenant de l'oxygène (9).

PROCEDE D'ELIMINATION DE NITRATES AU MOYEN D'UNE CONVERSION
MICRO-BIOLOGIQUE EN PRESENCE D'HYDROGENE GAZEUX.

On connaît déjà des procédés d'élimination de nitrates de l'eau au moyen d'une dénitrification dans des réacteurs microbiologiques divers. De tels procédés, réalisés dans des réacteurs à courant ascendant contenant une biomasse dénitrifiante granulée, ont été décrits par exemple par Lettinga et al Biotechnol. Bioeng. Vol 22 (1980) pp 699 à 734 et par Timmermans, thèse de doctorat Kath. Univ. Leuven 1983 "Kinetics and guide-lines for the design of biological denitrification systems of water. "

En particulier, pour des eaux usées, différents réducteurs ont été utilisés tels que des sucres, de la matière organique biodégradable peu coûteuse, de la cellulose ainsi que de l'éthanol et du méthanol. Pour de l'eau potable cependant, seuls les deux derniers ont été utilisés. Tous ces réducteurs usuels présentent l'inconvénient qu'ils se dissolvent dans l'eau et sous peina de réduire la qualité de l'eau potable produite doivent être éliminés à l'aide d'un procédé plus ou moins coûteux, à la fin du procédé de dénitrification.

Un procédé de dénitrification d'eau potable dans lequel de l'hydrogène est utilisé est également déjà connu et a été décrit par Gros et al (1982) " Nitratentfernung aus dem Trinkwasser. Untersuchung von drei Verfahren in einer Pilotanlage in Zollikofen." Kurzbericht Gebr. SULZER Juni 1982.

Selon ce procédé, le gaz hydrogène est utilisé comme réducteur. L'hydrogène gazeux est introduit au bas d'un réacteur et diffuse vers le haut dans la cuve de réacteur. L'eau se déplace dans la même direction. La biomasse responsable du processus de dénitrification est retenue dans la cuve de réacteur sur des éléments mélangeurs en forme de lamelles. Ce procédé, bien qu'utilisant de l'hydrogène comme réducteur, ne permet pas d'obtenir une densité de biomasse élevée et laisse subsister dans l'eau potable une faible quantité de nitrites, ce qui est inadmissible dans l'eau potable.

La présente invention a pour but un procédé de dénitrification au moyen d'un réducteur non polluant qu'est l'hydrogène dans des conditions économiques optima en ce qui concerne la croissance de la

48.10/1966.

biomasse , la consommation d'hydrogène, et l'élimination d'intermédiaires nitrés nocifs.

Suivant l'invention, un procédé microbiologique d'élimination de nitrates dans lequel de l'eau à dénitrifier traverse un premier réacteur contenant une biomasse dénitrifiante présentant une grande affinité pour de l'hydrogène et dans lequel dans le bas de ce premier réacteur de l'hydrogène gazeux est injecté est caractérisé en ce que l'effluent de ce premier réacteur est introduit dans un deuxième réacteur contenant une biomasse transformant tous les composants azotés résiduels dans cet effluent en nitrates.

Le procédé d'élimination de nitrates suivant l'invention peut être appliqué au traitement de tout liquide en dilution acqueuse, notamment à de l'eau qui est destinée à servir d'eau potable. Le matériau dilué peut avoir une concentration entre 10 et 1000 mg d'azote sous forme de nitrates par litre. De préférence, il ne comprend pas, ou seulement très peu, de particules solides en suspension. Le liquide à dénitrifier peut, mais ne doit pas, contenir des substances minérales dissoutes, ni des substances organiques biodégradables dissoutes.

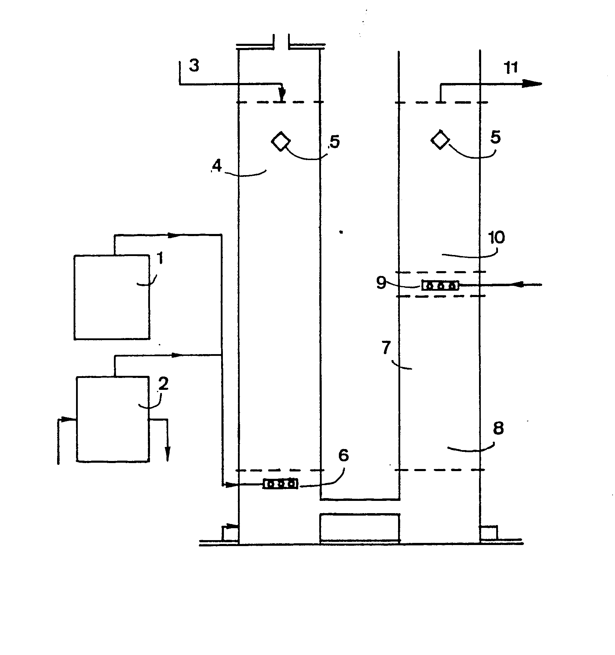

L'invention est expliquée ci-dessous par rapport à un exemple d'une forme d'exécution en se référant au dessin annexé.

De l'hydrogène gazeux produit suivant un processus chimique ou physique est emmagasiné dans un réservoir 1 et/ou est produit par fermentation biologique, dans un fermenteur 2, éventuellement suivi d'une phase de purification.

L'eau ou la dilution acqueuse à dénitrifier est introduite au moyen d'un conduit 3 dans la partie supérieure de la cuve 4 d'un premier réacteur. Elle descend dans ce réacteur à une vitesse choisie entre 0,1 et 30 m/h. Des supports 5 pour une biomasse dénitrifiante sont immergés dans le liquide de la cuve 4. Ils sont de préférence en polyuréthane réticulé. Cependant, d'autres supports présentant un quotient élevé surface sur volume et une porosité importante peuvent être utilisés. La surface en $m^2$ de support par unité de volume du réacteur en $m^3$ doit être choisie de préférence supérieure à 1000 et au moins égale à 100.

L'hydrogène provenant du réservoir 1 et/ou du fermenteur 2 est injecté au bas de la cuve 4 du premier réacteur par exemple à travers des tuyères 6 ou à travers une plaque d'acier ou de verre frittés èt monte à contre-courant de l'eau à dénitrifier qui y descend. Le fait que l'hydrogène monte à contre-courant de l'eau a l'avantage que les gaz libérés par les réactions micro-biologiques peuvent ensuite chasser l'oxygène dissout dans l'eau fraîche qui arrive. Ainsi, les bactéries sont obligées pour se nourrir, d'obtenir l'oxygène nécessaire par la décomposition de nitrates.

Arrivée au bas de la cuve 4, l'eau déjà fortement dénitrifiée est envoyée dans la cuve 7 d'un deuxième réacteur en traversant d'abord une zone 8, qui dans certains cas particuliers peut être omise. Ensuite, l'eau arrive dans une zone 10 appelée ici deuxième réacteur. Cette zone est située au dessus d'un diffuseur 9 introduisant un gaz contenant de l'oxygène, par exemple de l'air, et le dessus de la cuve 7. Elle renferme une biomasse nitrifiante, constituée par exemple de bactéries organo-aérobiques et/ou chemolitotrophiques aérobiques. Dans cette zone 10, ou dans ce deuxième réacteur, l'air amené par le diffuseur 9 permet l'accroissement de la biomasse nitrifiante fixée également sur des supports 5, identiques par exemple aux supports 5 servant à la biomasse dénitrifiante dans la cuve 4 du premier réacteur. La biomasse nitrifiante dans la zone 10 d'aération assure l'élimination des intermédiaires nitreux nocifs, ainsi que de résidus de matière organique. Le taux d'aération défini par la quantité d'air entrant par le diffuseur 9 est choisi de telle manière que le liquide sortant de cette zone 10 contient au moins 4 mg/l d'oxygène dissout. Au lieu de gaz, un fluide contenant de l'oxygène libre ou sous une forme qui au contact avec l'influent de la zone 10 produit de l'oxygène in statu nascendi (Ozone, $H_2O_2$ etc...) peut aussi être utilisé.

Dans l'exemple montré au dessin, le liquide dans la cuve 7 suit un mouvement ascendant, et dans le deuxième réacteur ou la zone 10, l'oxygène ou l'air circule dans la même direction que le liquide.

Il est cependant concevable, et dans certains cas plus avantageux, d'alimenter ce deuxième réacteur également par le haut et d'obtenir ainsi un mouvement à contre-courant entre l'oxygène et le liquide.

Suivant l'exemple montré au dessin, le liquide à dénitrifier descendant dans la cuve 4 est envoyé ensuite dans la zone 8 de la

cuve 7. Cette zone 8 peut être considérée comme un troisième réacteur dans lequel l'hydrogène résiduel est entièrement consommé. Cette zone 8 contient une biomasse dénitrifiante qui comme dans le premier réacteur dans la cuve 4 peut être fixée sur des supports 5 ou bien, puisque selon l'exemple elle est traversée par un courant ascendant ; elle peut former un lit de boue traversé par ce courant suffisemment lentement pour éviter des turbulences. Dans ce cas, des conditions sont produites qui permettent différentes configurations et assemblages avantageux des micro-organismes dénitrifiants.

Contrairement à ce qui est montré au dessin, ce troisième réacteur constitué par la zone 8 de la cuve 7 peut se trouver aussi au bas de la cuve 4, en dessous du diffuseur 6 d'hydrogène ou peut être logé dans une cuve indépendante non montrée. Dans ce dernier cas, il peut être avantageux de mettre les premier et deuxième réacteurs sous pression et de faire fonctionner le troisième réacteur à une pression sensiblement inférieure à celles des premier et deuxième réacteurs.

Le premier réacteur dans la cuve 4 peut fonctionner à des températures entre 5°C et 40°C et à des pH entre 5 et 10. Bien que le liquide à dénitrifier peut ne pas comprendre des sels minéraux dissouts, l'addition de sels minéraux, en particulier des sels contenant du phosphore, est très utile dans la phase préparatoire du fonctionnement du réacteur. Cette addition doit avoir lieu en quantité suffisante pour produire la biomasse dénitrifiante. Pendant cette phase préparatoire, également, la biomasse dénitrifiante est de préférence ensemencée d'une culture à prédominance d'Alcaligenes eutrophus additionnée à l'eau.

Au contraire, la zone nitrifiante 10, appelée aussi le deuxième réacteur, est ensemencée avec un inoculum enrichi de bactéries nitrifiantes en provenance par exemple du sol et d'eaux de surface.

En fonctionnement normal de l'installation montrée au dessin, la dénitrification d'une eau potable est en général largement accomplie après un temps de passage de 30 à 600 minutes à travers les différents réacteurs. A des taux d'influent de 0,5 kg d'azote sous forme de nitrates par $m^3$ de volume du premier réacteur et par jour, des rendements d'élimination d'azote sous forme de nitrates d'environ 90% peuvent être obtenues.

La profondeur du diffuseur 6 par rapport au niveau supérieur de liquide dans la cuve 4 est choisie en fonction du rendement désiré de l'hydrogène gazeux. Ce rendement doit être supérieur à au moins 50% .

L'hydrogène utilisé peut provenir d'une bonbonne munie d'un réducteur de pression qui livre le gaz à une pression de 1.5 atmosphères au bas d'un premier réacteur d'une hauteur de 2 m. Suivant un exemple particulier, le réacteur fonctionne à un taux volumètrique de 10 $m^3/m^3$ du volume du premier réacteur et par jour. De l'eau de robinet à 15°C contenant 50 mg d'azote sous forme de nitrates par litre peut être traitée dans le premier réacteur (cuve 4) à un taux volumètrique de 0,5 $kg$ d'azote sous forme de nitrates par $m^3$ de volume du réacteur et par jour. La biomasse dénitrifiante fixée sur des supports en polyuréthane est de 20 g de matière sèche par litre de volume du réacteur. Elle permet de transformer 90% des nitrates en $N_2$ gazeux en utilisant l'hydrogène gazeux diffusant vers le haut avec un rendement de 17%. Lorsque l'eau entre dans la zone 8 qui renferme la même biomasse, elle contient encore 5 mg d'azote sous forme de nitrates par litre. Ce taux peut y être réduit au moyen de l'hydrogène dissout dans l'eau jusqu'à 1 mg d'azote sous forme de nitrates par litre.

L'aération par le diffuseur 9 permet à la biomasse nitrifiante dans la zone 10 d'éliminer des intermédiaires nitrés, notamment les nitrites et éventuellement de l'ammoniaque. La capacité d'élimination d'azote sous forme de nitrates de l'ensemble est environ 0.4 $kg/m^3$ de volume du premier réacteur ou 80% lorsque le temps de passage total est d'environ 140 min.

En variante, il est possible d'utiliser de l'hydrogène provenant d'un fermenteur biologique, même si le gaz fourni par ce fermenteur ne contient pas seulement de l'hydrogène. Cela est possible notamment du fait que le gaz fourni par un fermenteur contient en principe seulement de l'hydrogène et de l'anhydride d'acide carbonique et très peu d'autres gaz. En particulier, dans un fermenteur de Clostridium butyricum décomposant des biopolymères ou sucres en hydrogène, $CO_2$ et des acides organiques tels que lactate, acétate et butyrate, l'hydrogène peut être produit à un taux de 11 $m^3/m^3$ de volume du fermenteur. Lorsque le gaz contenant de l'hydrogène provenant du fermenteur de Clostridium est utilisé dans le procédé de dénitrification à 20°C et un temps de passage de 50 min, pour une eau de surface contenant 20 mg d'azote sous forme de nitrates par litre, l'effluent de la zone 10 contient un taux résiduel de 4 mg d'azote sous forme de nitrates par litre.

Selon une autre variante du lactacte, acétate et butyrate sont transformés en hydrogène par des cultures de bactéries photosynthétiques à des taux entre 0.1 à 0.9 $m^3$ $H_2/m^3$ de volume du fermenteur par jour et avec des rendements entre 23 et 100 %.

Suivant encore une autre variante, un système à deux fermenteurs est utilisé pour tirer avantage d'un carbohydrate de peu de valeur tel que le lactoserum qui est transformé entièrement en hydrogène. Dans ce système, dans un premier fermenteur de Clostridium (butyricum, pasteurianum, butylicum, acétobutylicum, tyrobutyricum, beijerinckii, bifermentans, oceanicum ou oroticum etc...) fonctionnant dans l'obscurité, la lactose est transformée en hydrogène, anhydride d'acide carbonique et acides gras, et dans un deuxième fermenteur, les acides gras sont transformés en hydrogène par une photo-fermentation par Rhodobacter capsulatus, Rhodospirillum rubrum ou Rhodomicrobium vannielii. Les phases gazeuses des deux fermenteurs sont utilisées simultanément dans le procédé de dénitrification.

Dans certains cas, un courant d'hydrogène très important peut être injecté par les tuyères 6 et récolté au dessus du niveau de la cuve 4. L'hydrogène ainsi récolté peut être purifié par élimination des gaz non désirables par exemple par des parois semi-perméables du commerce et réinjecté par les tuyères 6.

L'ensemble montré au dessin peut être complété par un appareil de désinfection, non représenté, par exemple à ozone, à chlore ou à rayons ultraviolets. Cet appareil de désinfection est parcouru par l'effluent de la cuve 7.

Il est également possible d'amener l'influent au bas du réacteur 4 et, dans ce cas, de fixer la biomasse dénitrifiante de ce réacteur, par exemple sur des particules formant un lit fluidisé sous l'effet du courant ascendant de l'influent et de l'hydrogène.

**0 193 979**

Dans ce dernier cas, le mouvement du liquide doit être relativement rapide. Il peut alors être avantageux de recycler le liquide dans la zone ou le réacteur 4 vers l'entrée de l'influent, afin d'obtenir une durée de séjour moyenne de l'influent désirée dans la zone ou le réacteur 4.

Dans ce cas d'un mouvement ascendant de l'influent, il est possible, notamment de disposer les différentes zones de réaction ou réacteurs dans une seule et même cuve; cela est possible également lorsque l'influent suit un mouvement descendant dans les différentes zones de réaction ou les différents réacteurs, comme cela a été expliqué ci-dessus.

L'invention permet d'obtenir, notamment des liquides totalement dépourvus de composants azotés, nocifs, même en très faible quantité, liquides propres à la consommation tel l'eau potable. Ce résultat est obtenu grâce à la transformation en nitrates de tous ces composants azotés, sous-produits de la dénitrification préalable.

### REVENDICATIONS.

1. Procédé microbiologique d'élimination de nitrates dans lequel un liquide en solution acqueuse à dénitrifier traverse un premier réacteur (4) contenant une biomasse dénitrifiante utilisant de l'hydrogène avec grande affinité et dans lequel, dans le bas de ce premier réacteur (4), de l'hydrogène gazeux est injecté, caractérisé en ce que l'effluent de ce premier réacteur est introduit dans un deuxième réacteur (10) contenant une biomasse transformant tous les composants azotés résiduels de cet effluent en nitrates

2. Procédé suivant la revendication 1, caractérisé en ce que dans le premier réacteur (4) le liquide à dénitrifier suit un mouvement descendant lent à contre-courant du mouvement de l'hydrogène gazeux et en ce que dans le deuxième réacteur (10) le liquide suit un mouvement lent ascendant parallèlement au mouvement d'un fluide contenant de l'oxygène ou des composés qui, au contact avec l'influent du deuxième réacteur, produisent de l'oxygène in statu nascendi.

3. Procédé suivant la revendication 1, caractérisé en ce que dans le premier réacteur (4) le liquide à dénitrifer suit un mouvement descendant lent à contre-courant du mouvement de l'hydrogène gazeux et en ce que dans le deuxième réacteur (10), le liquide suit également un mouvement descendant lent à contre-courant du fluide contenant de l'oxygène.

4. Procédé suivant la revendication 1, caractérisé en ce que dans le premier réacteur (4), le liquide à dénitrifier suit un mouvement ascendant parallèlement au mouvement de l'hydrogène et en ce que dans le deuxième réacteur (10), le liquide suit également un mouvement ascendant.

5. Procédé suivant une des revendications 3 ou 4, caractérisé en ce que toutes les zones de réaction ou réacteurs (4, 10), parcourus par un mouvement dans le même sens sont logés dans une seule et même cuve.

6. Procédé suivant une des revendications précédentes, caractérisé en ce qu'à la suite du premier réacteur (4) et avant l'entrée dans le deuxième réacteur (10), le liquide à dénitrifier traverse un troisième réacteur (8) contenant une biomasse dénitrifiante dans lequel l'hydrogène résiduel provenant du premier réacteur (4) et dissout dans le 48.10/1966.

liquide est entièrement consommé.

7.  Procédé suivant la revendication 4, caractérisé en ce que la consommation de l'hydrogène résiduel dans le dit troisième réacteur(8) a lieu dans la partie de la cuve (4) renfermant le premier réacteur, située en dessous du dispositif (6) injectant l'hydrogène gazeux.

8.  Procédé suivant la revendication 4, caractérisé en ce que la consommation de l'hydrogène résiduel dans le dit troisième réacteur(8) a lieu dans la partie de la cuve (7) renfermant le deuxième réacteur (10), située en dessous du dispositif injectant le fluide apportant de l'oxygène.

9.  Procédé suivant la revendication 4, caractérisé en ce que les premier et deuxième réacteurs (4 et 10) sont maintenus sous pression, tandis que le troisième réacteur (8) est maintenu à une pression sensiblement inférieure à celle des premier et deuxième réacteurs.

10.  Procédé suivant une des revendications précédentes, caractérisé en ce que la quantité d'hydrogène envoyée dans le premier réacteur (4) est importante et en ce que l'hydrogène excédentaire sortant du premier réacteur est séparé des autres gaz et recyclé.

11.  Procédé suivant une des revendications précédentes, caractérisé en ce que dans le premier réacteur (4) le liquide à dénitrifier traverse une biomasse contenant une population de bactéries à prédominance d'Alcaligenes eutrophus et en ce que dans le deuxième réacteur (10), le liquide à dénitrifier traverse une biomasse contenant des bactéries organo-aérobiques et/ou chemolitotrophiques aérobiques.

12.  Procédé suivant une des revendications précédentes, caractérisé en ce que l'hydrogène utilisé est celui contenu dans le gaz fourni par au moins un fermenteur renfermant au moins une culture des bactéries suivantes : Rhodobacter capsulatus, Rhodospirillum rubrum, Rhodomicrobium vannielii ou une espèce de clostridium.

¹/₁